# EUROPEAN PATENT APPLICATION

(11) **EP 1 073 015 A2**
(43) Date of publication of application: **31.01.2001**
(21) Application number: 00116419.3
(22) Date of filing: 28.07.2000
(51) Int. Cl.: G06T 9/00

(54) **Image signal processor for compression and encoding**

(30) Priority: 30.07.1999 JP 21752999
(71) Applicant: OLYMPUS OPTICAL CO., LTD., Tokyo (JP)
(72) Inventor: Kondoh, Takashi, c/o Olympus Optical Co., Ltd.,IPD, Hachioji-shi, Tokyo (JP)
(74) Representative: Kuhnen & Wacker

(57) **Abstract**

An image signal processor has a compression processing section (102, 103) and an encoding processing section (105). The compression encoding processing section (105) separates image data into DC coefficients and AC coefficients and then compresses the respective components. The encoding processing section (105) encodes image data corresponding to the DC coefficients among the image data compressed by the compression processing section (102, 103).

## Description

The present invention relates to an image signal processor and particularly relates to an image signal processor conducting processings including image data encoding and decoding processings.

In recent years, image data have been handled in various fields as represented by digital cameras.

In handling image data, it is important to secure the secrecy of the contents of the image data and to protect the copyright thereof.

There is generally known, as a technique for securing the secrecy of the contents of image data, an image data encoding method.

Japanese Patent Examined Application Publication No. 7-122960, for example, proposes a method of encoding image data by providing a Vernam cipher machine in a digital camera.

Also, as a technique for protecting the copyright of image data, there is proposed a technique for inserting electronic watermarks into image data, which technique is referred to as an electronic watermark technique.

The electronic watermark technique includes a method of inserting electronic watermarks into an original signal and a method of inserting electronic watermarks into a frequency space (see NIKKEI ELECTRONICS 1997. 2. 24 pp. 99-124).

However, image data is normally very large in size and it is difficult to process encoding operation at high speed by means of a processor of relatively weak calculation power such as a processor built in a digital camera.

Generally, a digital camera or the like stores picked-up image data by compressing the image data according to a JPEG compression scheme and recording them on a storage medium or the like.

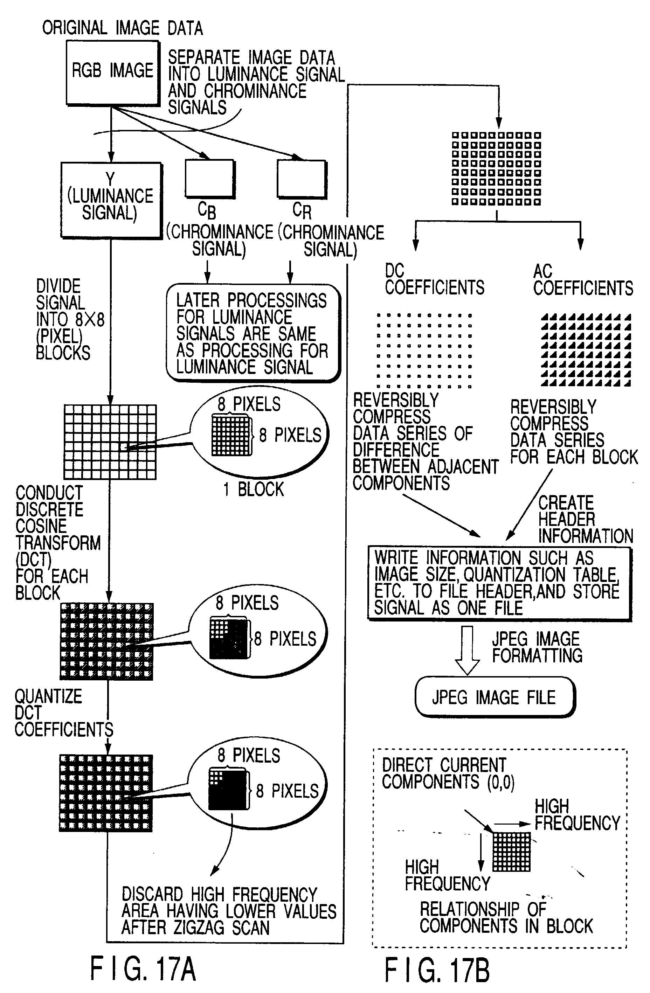

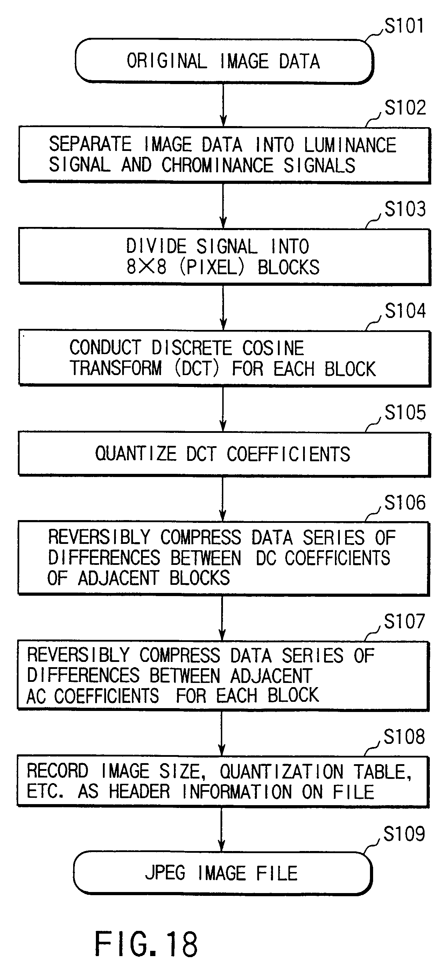

As is well known, this JPEG compression scheme is a technique for, as shown in FIGS. 17A, 17B and 18, dividing image data into small blocks of fixed size, converting the blocks into frequency space for each block, discarding high frequency components which do not much contribute to the human recognition of images and thereby compressing the image data.

FIG. 17A is a conceptual view of the algorithm of this JPEG compression scheme.

FIG. 18 is a flow chart for describing a compression processing conducted according to the JPEG compression scheme.
(1) Original image data (RGB image data) is obtained (in a step S101).
(2) The original image data (RGB image data) is separated into a luminance signal (Y) and chrominance signals (Cb) and (Cr) (in a step S102).
   It is noted that later processings for the chrominance signals (Cb) and (Cr) are the same as a processing for the luminance signal (Y) to be described below.
(3) The luminance signal (Y) is divided into blocks each consisting of 8 (pixels) × 8 (pixels) (in a step S103).
(4) The divided luminance signal (Y) is subjected to a discrete cosine transform (DCT) for each block (in a step S104).
(5) The DCT coefficients of the DCT-processed luminance signal (Y) are quantized for each block (in a step S105).
   At this moment, the luminance signal (Y) the DCT coefficients of which have been quantized is zigzag-scanned for each block. A high frequency component region having lower zigzag scan values is discarded, thus dividing the luminance signal (Y) into direct current (DC) coefficients and alternate current (AC) coefficients.
(6) As for the DC coefficients, a data series derived from the differences between DC coefficients of adjacent blocks is reversibly compressed (in a step S106).
(7) As for the AC coefficient, a data series derived from the differences between adjacent AC coefficients for each block is reversibly compressed (in a step S107).
(8) Header information, such as image size and quantization table, is created for each of the luminance signal (Y) and chrominance signals (Cb) and (Cr) each of which contains the DC coefficients and the AC coefficients separated from each other by the loss-less-compression processing. The created header information is written to a file header, thereby recording and storing each signal as one file (in a step S108).
(9) Each of the luminance signal (Y) and the chrominance signals (Cb) and (Cr) each of which contains the DC coefficients and the AC coefficients and which is recorded and stored as one file by writing the header information to the file header, is formatted for a JPEG image, thereby providing a JPEG image file (in a step S109).

FIG. 17B shows the relationship among components in a block according to the above-stated JPEG compression scheme.

Namely, with reference to a DC component (0, 0) at an upper left position, alternate currents are arranged so that the higher-frequency AC coefficients are put in further right and left directions.

Meanwhile, in case of a natural image, main components of the image data thereof are at low frequency side and a block size used for the JPEG compression scheme is as small as 8 pixels × 8 pixels. Thus, it is known that DC coefficients contribute more to the recognition of the contents of an image.

Conversely, it may be the that in case of a normal, natural image, it becomes quite difficult to recognize the content of the image if each block does not contain DC coefficients.

The present invention, therefore, takes note of the fact that only the image data part of the DC coefficients greatly contributing to the recognition of the content of the image is encoded and that the entire contents of the image data can be kept secret. Thus, the present invention is intended to encode a mass storage data file such as an image data file at high speed.

In case of the JPEG compression scheme, for example, by employing a technique for encoding only the image data part of the DC coefficients, it is possible to realize an image signal processor conducting processings including image data encoding and decoding processings which processor allows encoding a mass storage data file such as an image data file at high speed. This is because an operation amount in case of employing the above technique is reduced by about 1/64 (note, however, that since the DC coefficients and the AC coefficients are reversibly compressed, respectively, the reduction ratio is not exactly 1/64) compared with a technique for encoding an entire image data file containing the DC coefficients and the AC coefficients.

Furthermore, the present invention takes note of a technique for inserting electronic watermark data into an image when an image is encoded and compressed as a technique effective if image data is large in size and a technique for protecting the copyright of the image data. The present invention is, therefore, intended to encode a mass storage data file such as an image data file at high speed.

The electronic watermark data insertion technique is a method of inserting electronic watermarks into a series of direct current data components which have been converted into a frequency space (note, if the series of the direct current data components are arranged, an image having a lower resolution than that of an original image is obtained). In case of the above-stated JPEG compression scheme, for example, the size of a block is 8 × 8. Thus, simple calculation indicates that a calculated operation amount in case of employing the JPEG compression scheme becomes 1/64 of that in case of the conventional technique.

The electronic watermark insertion technique involves a method of inserting electronic watermarks into an original signal and a method of inserting electronic watermarks into a frequency space (see NIKKEI ELECTRONICS 1997. 2. 24, PP. 116-124). Since DC component data series can be regarded as an ordinary image although the resolution is decreased. It is, therefore, possible to utilize both of the methods.

Under these circumstances, the present invention has been made. It is, therefore, an object of the present invention to provide an image signal processor conducting processings including image data encoding and decoding processings which processor can encode an image data file at high speed and can insert electronic watermark data into an image by employing a technique for encoding only the image data part of DC coefficients and a technique for inserting electronic watermark data into an image so as to secure the secrecy of the contents of image data and to protect the copyright of the image data.

To attain the above object, according to the present invention, there is provided (1) an image signal processor comprising:
a compression processing section for separating image data into DC coefficients and AC coefficients, and compressing the DC coefficients and the AC coefficients, respectively; and
an encoding processing section for encoding image data corresponding to the DC coefficients among the image data compressed by the compression processing section.

Further, according to the present invention, there is provided (2) an image signal processor according to (1), characterized in that
the compression processing section comprises:
a block dividing section for dividing the image data into a plurality of blocks each of a predetermined size;
a loss-less-compression processing section for separating the image data into the DC coefficients and the AC coefficients for each of the blocks divided by the block dividing section, and then loss-less compressing the DC coefficients and AC coefficients, respectively; and
a header information recording section for creating header information on the compressed data for the respective DC coefficients and AC coefficients separated from each other by the loss-less-compression processing section. Furthermore, according to the present invention, there is provided (3) an image signal processor according to (1), characterized in that
the compressing processing section comprises:
a block dividing section for dividing image data into a plurality of blocks each of predetermined size;
a lossy-compression processing section for conducting a discrete cosine transform to the image data for each of the blocks divided by the block dividing section, and quantizing discrete cosine transform coefficients, thereby lossy compressing the image data for each block;
a loss-less-compression processing section for separating the image data for each of the blocks lossy compressed by the lossy-compression processing section into the DC coefficients and the AC coefficients, and then loss-less compressing the DC coefficients and the AC coefficients, respectively; and
a header information recording section for creating header information on the compressed image data for the DC coefficients and the AC coefficients separated from each other by the loss-less-compression processing section, respectively.

Moreover, according to the present invention, there is provided (4) an image signal processor according to (2), characterized in that
the encoding processing section includes an information embedding section for separating the image data into the DC coefficients and the AC coefficients, and then embedding predetermined authentication information into the image data corresponding to the DC coefficients; and
the loss-less-compression processing section loss-less compresses the image data corresponding to the DC coefficients into which the authentication information has been embedded by the information embedding section.

Additionally, according to the present invention, there is provided (5) an image signal processor according to (4), characterized in that
the authentication information is at least one of electronic signature and electronic watermark to specify copyright or to prevent illegal manipulation.

According to the present invention, there is provided (6) an image signal processor according to (2) or (3), characterized in that
the header information recording section records a code indicating that the image data corresponding to the DC coefficients have been encoded by the encoding processing section, to a predetermined position in header information.

Further, according to the present invention, there is provided (7) an image signal processor according to (6), characterized in that
the header information recording section records a code indicating that the image data corresponding to the DC coefficients have been encoded by the encoding processing section, to a predetermined position in header information.

Furthermore, according to the present invention, there is provided (8) an image signal processor comprising:
an information reading section for reading predetermined information from image data, at least part of the image data has been compressed and encoded;
a decoding processing section for reading encoded DC component data from the compressed image data based on the predetermined information read by the information reading section, and decoding image data corresponding to the encoded DC coefficients using a decoding key; and
an expansion processing section for expanding the image data corresponding to the DC coefficients decoded by the decoding processing section based on the predetermined information.

In addition, according to the present invention, there is provided (9) an image signal processor according to (8), characterized in that
the expansion processing section expands the image data using the predetermined information, the image data corresponding to the DC coefficients and image data corresponding to the AC coefficients.

Additionally, according to the present invention, there is provided (10) an image signal processor according to (9), characterized in that
the expansion processing section includes an authentication information reading section for reading the authentication information embedded into the image data corresponding to the DC coefficients.

Furthermore, according to the present invention, there is provided (11) an image signal processor according to (10), characterized in that
the information reading section includes a header information reading section for reading header information on the image data;
the expansion processing section expands the compressed image data based on the predetermined information read by the information reading section including the header information reading section; and
the decoding processing section decodes the encoded image data using a decoding key.

Moreover, according to the present invention, there is provided (12) an image signal processor comprising:
a header information reading section for reading header information from image data having the header information, at least part of the image data has been compressed and encoded, predetermined authentication information embedded into DC component data in the image data;
decoding processing section for reading encoded DC component data from the compressed image data based on the header information read by the header information reading section, and decoding image data corresponding to the encoded DC coefficients using a predetermined decoding key;
an expansion processing section for expanding the image data corresponding to the DC coefficients decoded by the decoding processing section, and thereby acquiring a data series of the DC coefficients; and
an authentication information reading section for reading the predetermined authentication information from the data series of the DC coefficients acquired by the expansion processing section.

This summary of the invention does not necessarily describe all necessary features so that the invention may also be a sub-combination of these described features.

The invention can be more fully understood from the following detailed description when taken in conjunction with the accompanying drawings, in which:

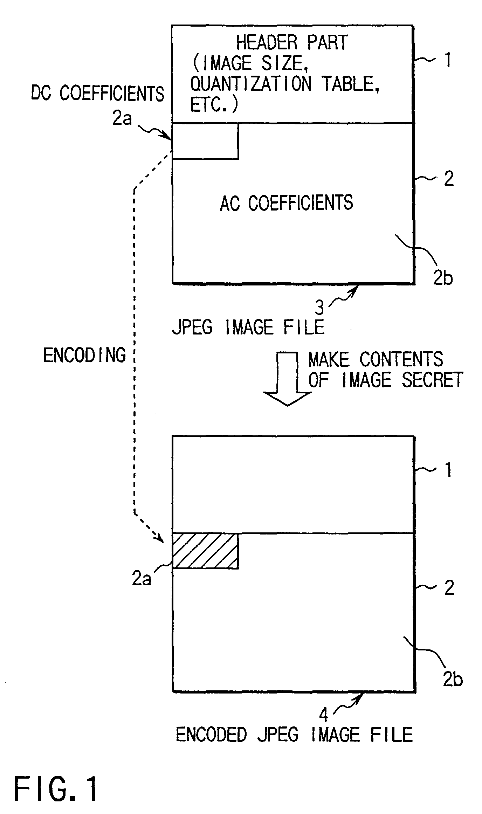

FIG. 1 is a typical view showing the outline of the first embodiment of an image signal processor according to the present invention;

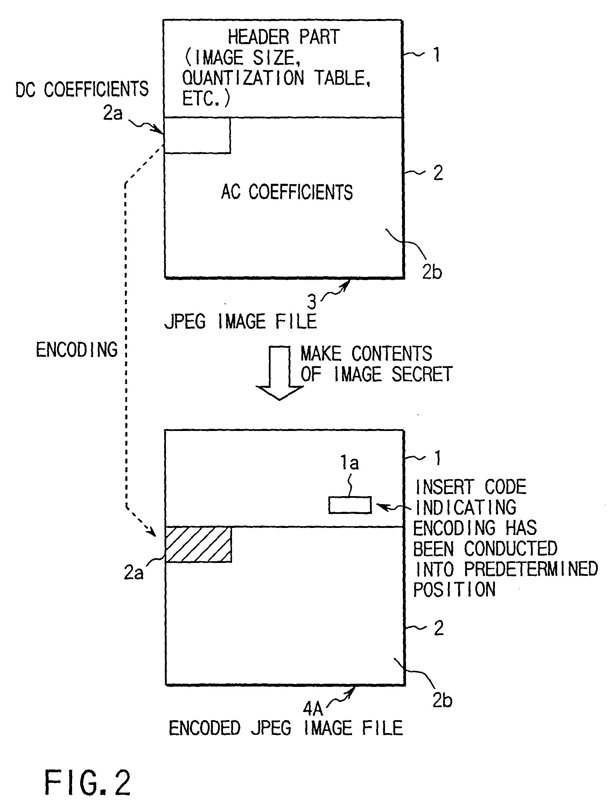

FIG. 2 is a typical view showing the outline of the second embodiment of an image signal processor according to the present invention;

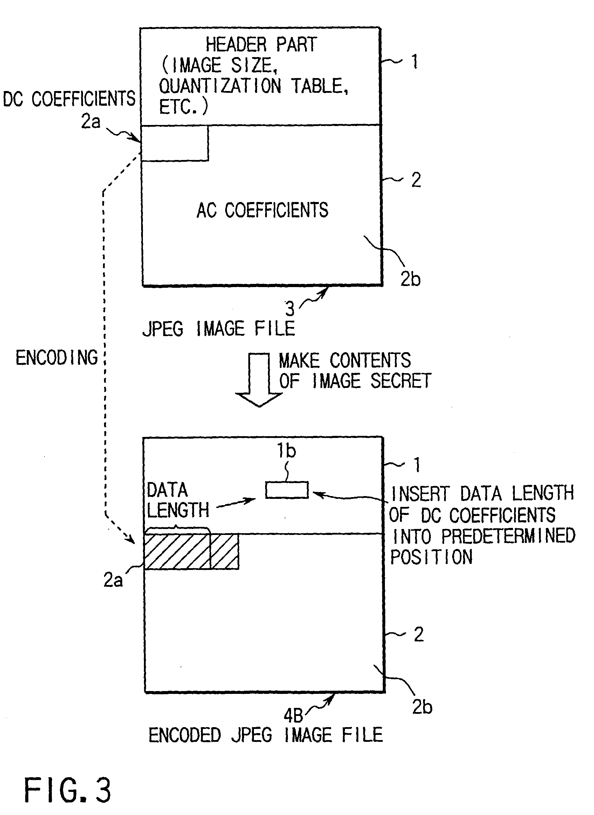

FIG. 3 is a typical view showing the outline of the third embodiment of an image signal processor according to the present invention;

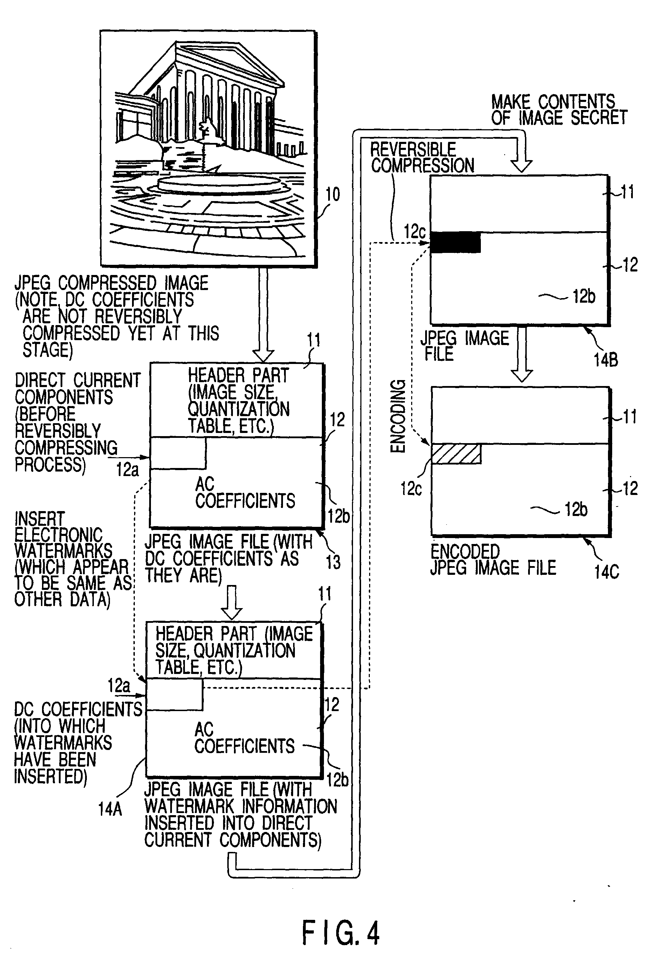

FIG. 4 is a typical view showing the outline of the fourth embodiment of an image signal processor according to the present invention;

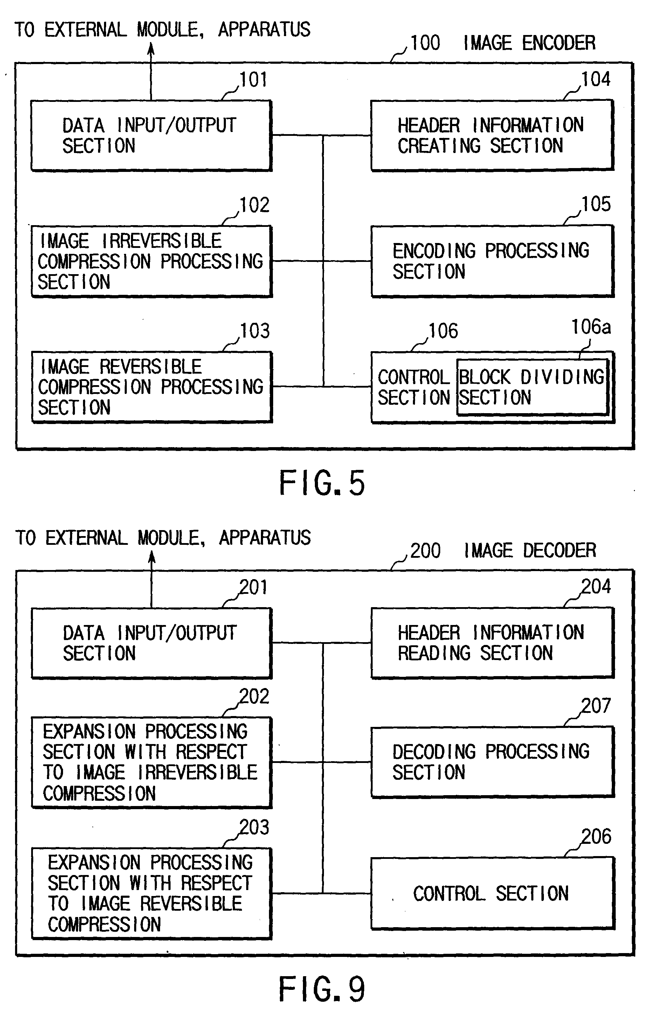

FIG. 5 is a block diagram showing the concrete constitution of an image signal processor in the first concrete example of the present invention;

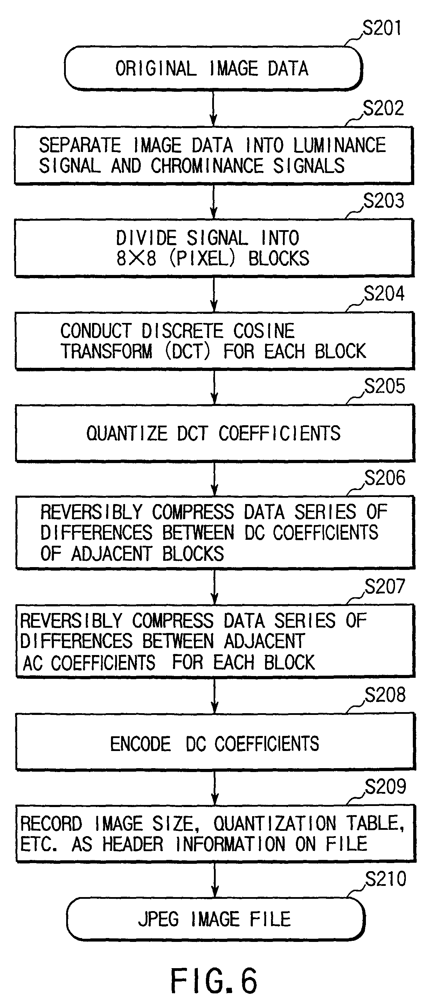

FIG. 6 is a flow chart for describing processing procedures based on the concrete constitution of the image signal processor in the first concrete example of the present invention;

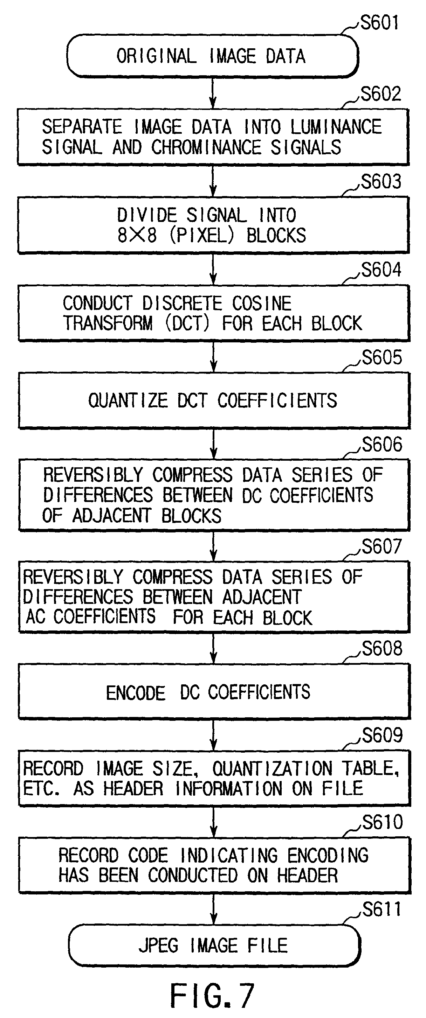

FIG. 7 is a flow chart for describing processing procedures based on the concrete constitution of the image signal processor in the second concrete example of the present invention;

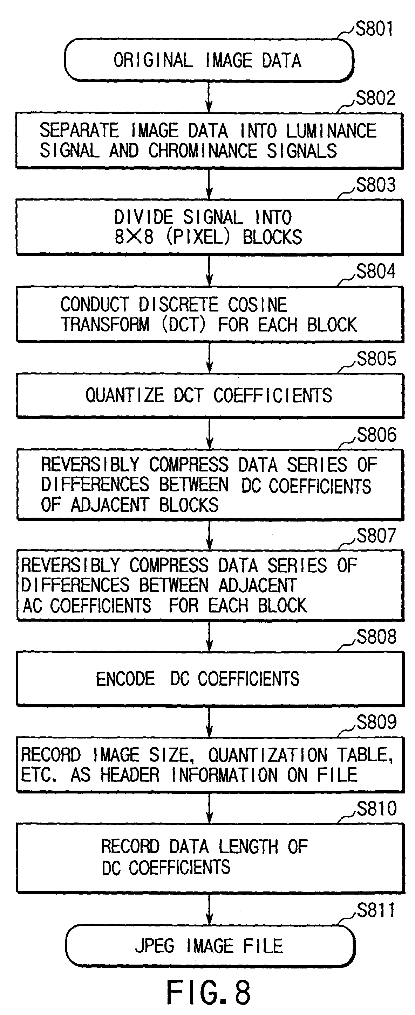

FIG. 8 is a flow chart for describing processing procedures based on the concrete constitution of the image signal processor in the third concrete example of the present invention;

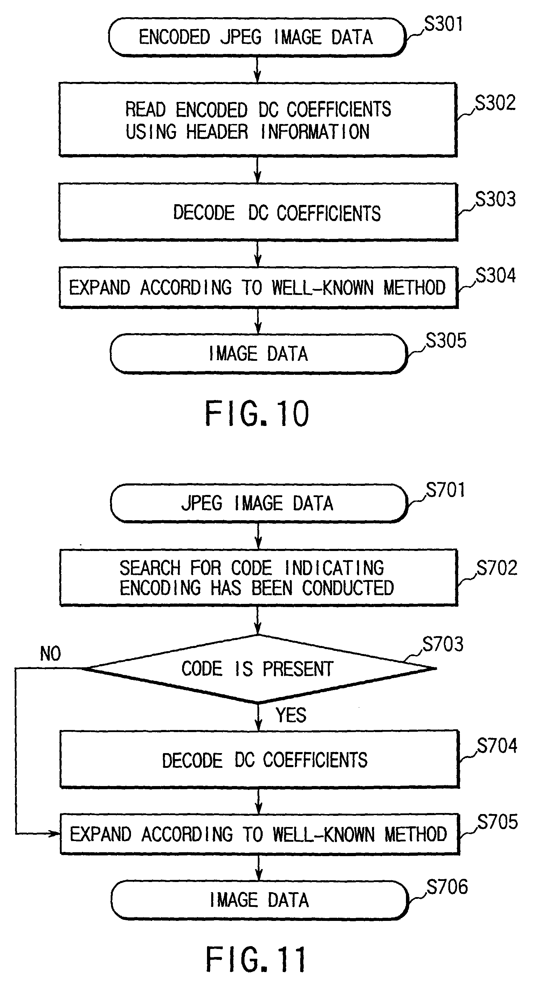

FIG. 9 is a block diagram showing the concrete constitution of the image signal processor in the fourth concrete example of the present invention;
FIG. 10 is a flow chart for describing processing procedures based on the concrete constitution of the image signal processor in the fourth concrete example of the present invention;
FIG. 11 is a flow chart for describing processing procedures based on the concrete constitution of the image signal processor in the fifth concrete example of the present invention;

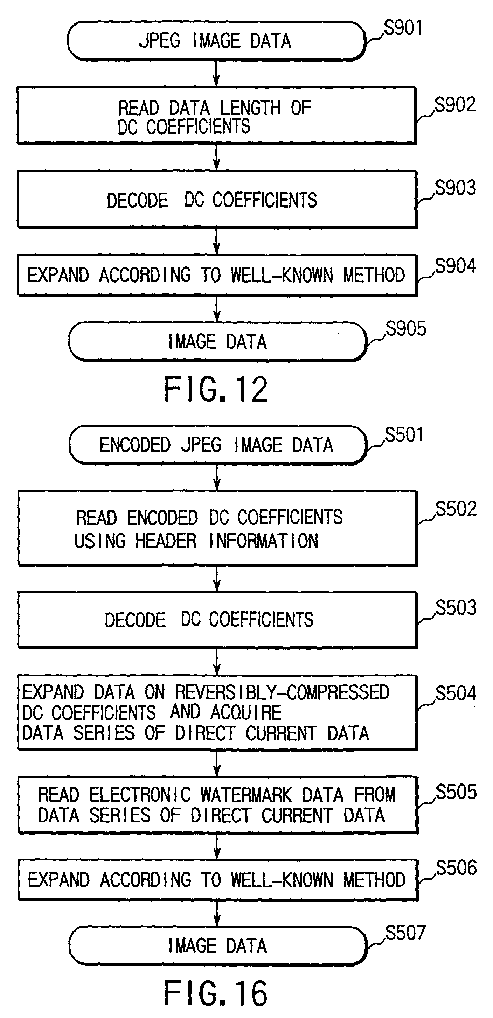

FIG. 12 is a flow chart for describing processing procedures based on the concrete constitution of the image signal processor in the sixth concrete example of the present invention;

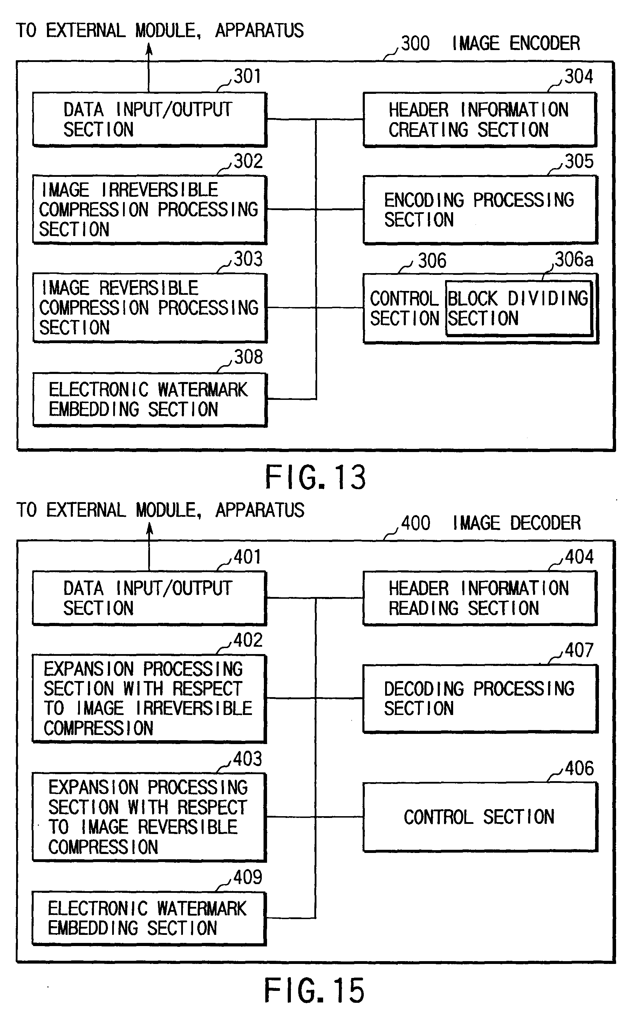

FIG. 13 is a block diagram showing the concrete constitution of the image signal processor in the seventh concrete example of the present invention;

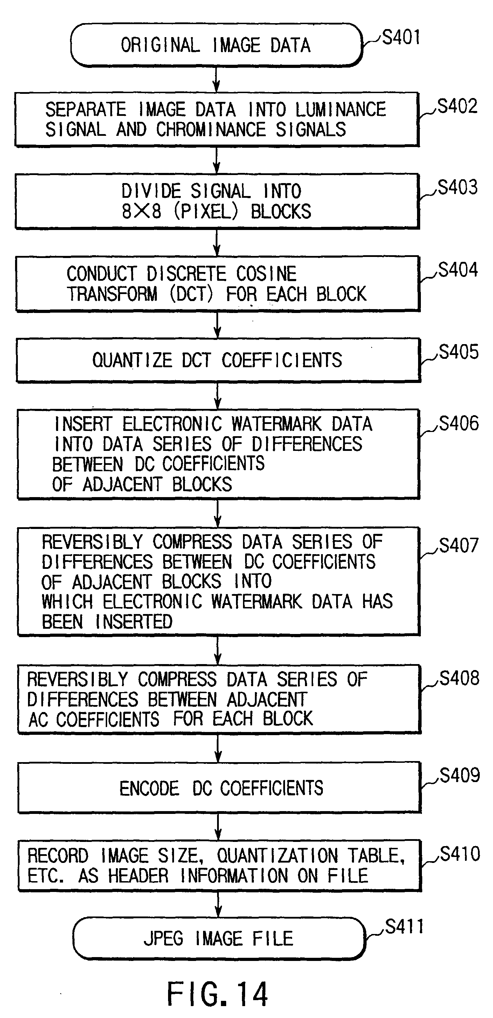

FIG. 14 is a flow chart for describing processing procedures based on the concrete constitution of the image signal processor in the seventh concrete example of the present invention;
FIG. 15 is a block diagram showing the concrete constitution of the image signal processor in the eighth concrete example of the present invention;
FIG. 16 is a flow chart for describing processing procedures based on the concrete constitution of the image signal processor in the eighth concrete example of the present invention;
FIGS. 17A and 17B are conceptual view of the algorithm of the JPEG compression scheme; and
FIG. 18 is a flow chart for describing a compression processing conducted according to the JPEG compression scheme.

Reference will now be made in detail to the presently preferred embodiments of the invention as illustrated in the accompanying drawings, in which like reference numerals designate like or corresponding parts.

The embodiments of the present invention will be described hereinafter with reference to the accompanying drawings.

First, an image signal processor the first to fourth embodiments according to the present invention will be outlined with reference to FIGS. 1 to 4.

### (First Embodiment)

FIG. 1 is a typical view showing the outline of the first embodiment of an image signal processor according to the present invention.

Namely, in the first embodiment, as shown in FIG. 1, a JPEG image file 3 consisting of a file header part 1 to which header information, such as image size and a quantization table, is written, and a data part 2 which contains DC coefficients 2a and AC coefficients 2b separated from each other by a loss-less-compression processing and which is formatted for a JPEG image is obtained based on the JPEG compression scheme already described above.

Next, to secure the secrecy of the contents of image data, a technique for encoding only the image data part of the DC coefficients 2a is employed for the JPEG image file to thereby obtain an encoded JPEG image file 4.

According to the first embodiment stated above, by employing the technique for encoding only the image data part of the DC coefficients 2a, an operation amount can be reduced by about 1/64 (note, however, that since the DC coefficients and the AC coefficients are reversibly compressed, respectively, the reduction ratio is not exactly 1/64) compared with that required in a conventional technique for encoding an entire image data file containing the DC coefficients 2a and the AC coefficients 2b. It is, therefore, possible to encode a mass storage data file such as image data file at high speed.

### (Second Embodiment)

FIG. 2 is a typical view showing the outline of the second embodiment of the image signal processor according to the present invention.

Namely, in the second embodiment, as shown in FIG. 2, a JPEG image file 3 consisting of a file header part 1 to which header information, such as image size and a quantization table, is written, and a data part 2 which contains DC coefficients 2a and AC coefficients 2b separated from each other by a loss-less-compression processing and which is formatted for a JPEG image, is obtained based on the JPEG compression scheme stated above.

To secure the secrecy of the contents of the image data, a technique for encoding only the image data part of the DC coefficients 2a is employed for the JPEG image file 3 and a code 1a indicating that the image data part is encoded is inserted into a predetermined position of the header part 1 of the file 3, thereby obtaining an encoded JPEG image file 4A.

According to the second embodiment stated above, by employing the technique for encoding only the image data part of the DC coefficients 2a, an operation amount can be reduced by about 1/64 (note, however, that since the DC coefficients 2a and the AC coefficients 2b are reversibly compressed, respectively, the reduction ratio is not exactly 1/64) compared with a conventional technique for encoding an entire image data file containing the DC coefficients 2a and the AC coefficients 2b. It is, therefore, possible to encode a mass storage data file such as an image data file at high speed.

Further, according to the second embodiment, since the code 1a indicating that the image data part is encoded is inserted into the predetermined position of the header part 1, it is possible to facilitate a read processing and a decoding processing for the encoded JPEG image file 4A.

### (Third Embodiment)

FIG. 3 is a typical view showing the outline of the third embodiment of the image signal processor according to the present invention.

Namely, in the third embodiment, as shown in FIG. 3, a JPEG image file 3 consisting of a file header part 1 to which header information, such as image size and a quantization table, is written, and a data part 2 which contains DC coefficients 2a and AC coefficients 2b separated from each other by a loss-less-compression processing and which is formatted for a JPEG image, is obtained based on the JPEG compression scheme already stated above.

To secure the secrecy of the contents of the image data, a technique for encoding only the image data part of the DC coefficients 2a is employed for the JPEG image file 3 and the data length 1b of the DC coefficients 2a which have been reversibly compressed is inserted into a predetermined position of the header part 1, thereby obtaining an encoded JPEG image file 4B.

According to the third embodiment stated above, by employing the technique for encoding only the image data part of the DC coefficients 2a, an operation amount can be reduced by about 1/64 (note, however, that since the DC coefficients and the AC coefficients are reversibly compressed, respectively, the reduction ratio is not exactly 1/64) compared with a conventional technique for encoding an entire image data file containing the DC coefficients 2a and the AC coefficients 2b. It is, therefore, possible to encode a mass storage data file such as an image data file at high speed.

Further, according to the third embodiment, since the data length 1b of the DC coefficients 2a which have been reversibly compressed is inserted into the predetermined position of the header part 1, it is possible to facilitate a read processing and a decoding processing for the encoded JPEG image file 4B.

### (Fourth Embodiment)

FIG. 4 is a typical view showing the outline of the fourth embodiment of the image signal processor according to the present invention.

Namely, in the fourth embodiment, an image 10 which is subjected to JPEG compression according to the JPEG compression scheme stated above is first obtained as shown in FIG. 4 (note, however, that it is assumed that DC coefficients are not reversibly compressed at this stage).

Thereafter, from the image 10, a JPEG image file 13 consisting of a file header part 11 to which header information, such as image size and a quantization table, is written, and a data part 12 which contains DC coefficients 12a which are not reversibly compressed yet and AC coefficients 12b reversibly compressed and which data part is formatted for a JPEG image, is obtained.

Next, to protect the copyright of the image data, a technique for inserting electronic watermark data (which data appears to be the same as the other data) into the image data part of the DC coefficients 12a which are not reversibly compressed, is employed for the JPEG image file 14A, thereby obtaining a JPEG image file 14B.

Thereafter, a technique for encoding only the DC coefficients 12c reversibly compressed is employed for the JPEG image file 14B, thereby obtaining an encoded JPEG image file 14C.

According to the fourth embodiment, by employing the technique for inserting electronic watermark data (which data appears to be the same as the other image data) into the image data part of the DC coefficients 12a which are not reversibly compressed yet and a technique for encoding only the DC coefficients 12c which have been reversibly compressed, an operation amount can be reduced by about 1/64 (note, however, that since the DC coefficients and the AC coefficients are reversibly compressed, respectively, the reduction ratio is not exactly 1/64) compared with the conventional technique for encoding an entire image data file containing the DC coefficients 2a and the AC coefficients 2b. It is, therefore, possible to encode a mass storage data file such as an image data file at high speed. Besides, it is possible to protect the copyright of the image data and to secure the secrecy of the contents of the image data.

Next, description will be given to some concrete constitutions of the image signal processor according to the present invention in which the above-stated first to fourth embodiments are included, as well as the processing procedures thereof.

### (First Concrete Example)

FIG. 5 is a block diagram showing the concrete constitution of an image signal processor according to the first concrete example.

Namely, this image signal processor is constituted as an mage encoder 100 which consists of a data input/output section 101, an image lossy-compression processing section 102, an image loss-less-compression processing section 103, a header information recording section 104, an encoding processing section 105 and a control section 106 all of which constituent elements are mutually connected by an internal bus.

Since the data input/output section 101 is connected to an external module, an external apparatus or the like, the section 101 inputs original image data (e.g., RGB image data) to be encoded and outputs, if necessary, an encoded image data file or the like.

The image lossy-compression processing section 102 and the image loss-less-compression processing section 103 conduct, if necessary, an image lossy-compression processing and an image loss-less-compression processing to DC coefficients and AC coefficients separated from each other in the course of JPEG compression, respectively, based on the JPEG compression scheme stated above.

The header information recording section 104 creates header information, such as image size and a quantization table, for compression image data containing the DC coefficients and the AC coefficients separated from each other by a loss-less-compression processing in the course of the above-stated JPEG compression.

The encoding section 105 conducts a predetermined encoding processing only to the DC coefficients separated by the loss-less-compression processing in the course of the above-stated JPEG compression.

Further, the control section 106 controls the other constituent elements and conducts predetermined operations and processings necessary in the course of the JPEG compression according to the JPEG compression scheme stated above and also necessary for encoding only the DC coefficients.

In that case, the control section 106 includes a block dividing section 106a for dividing image data into a plurality of blocks each of a predetermined size.

FIG. 6 is a flow chart for describing processing procedures based on the concrete constitution of the image signal processor in the first concrete example.

First, the data input/output section 101 inputs original image data (RGB image data) (in a step S201).

Next, the control section 106 separates the original image data (RGB image data) into a luminance signal (Y) and chrominance signals (Cb) and (Cr) (in a step S202).

Then, the block dividing section 106a in the control section 106 divides each of the luminance signal (Y) and the chrominance signals (Cb) and (Cr) into blocks each consisting of 8 (pixels) × 8 (pixels) (in a step S203).

Next, the control section 106 conducts a discrete cosine transform (DCT) to each of the divided luminance signal (Y) and chrominance signals (Cb) and (Cr) for each block (in a step S204).

The control section 106 quantizes each of the divided luminance signal (Y) and chrominance signals (Cb) and (Cr) for each block according to DCT counting (in a step S205).

At this moment, each of the luminance signal (Y) and chrominance signals (Cb) and (Cr) DCT coefficients of which have been quantized is zigzag-scanned for each block and a high frequency component region having lower zigzag scan values is discarded, thereby separating each signal into DC coefficients and AC coefficients.

The image loss-less-compression processing section 103 reversibly compresses a data series derived from the differences between DC coefficients of adjacent blocks (in a step S206).

The image loss-less-compression processing section 103 reversibly compresses a data series derived from the differences between adjacent AC coefficients for each block (in a step S208).

Next, the encoding processing section 105 encodes only the DC coefficients which have been reversibly compressed (in a step S208).

The header information recording section 104 creates header information, such as image size and a quantization table, for each of the luminance signal (Y) and chrominance signals (Cb) and (Cr) each of which contains the DC coefficients which have been reversibly compressed and the encoded and the AC coefficients which have been only reversibly compressed, and the created header information is written to the file header, thereby recording and storing each signal as one file (in a step S209).

The control section 106 formats each of the luminance signal (Y) and the chrominance signals (Cr) and (Cb) for a JPEG image, each of which signal contains the DC coefficients and the AC coefficients and which is recorded and stored as one file by writing the header information to the file header, thereby providing a JPEG image file (in a step S210).

According to the first concrete example stated above, there is provided an image signal processor corresponding to the above-stated first embodiment and characterized by comprising the compression processing section 102 which separates image data into the DC coefficients and the AC coefficients and which compresses the respective components, and the encoding processing section 105 which encodes the image data on the DC coefficients among the image data compressed by the compression processing section.

### (Second Concrete Example)

The concrete constitution of an image signal processor according to the second concrete example is the same as that of the image signal processor according to the first concrete example shown in FIG. 5.

FIG. 7 is a flow chart for describing processing procedures based on the concrete constitution of the image signal processor according to the second concrete example.

First, the data input/output section 101 inputs original image data (RGB image data) (in a step S601).

Second, the control section 106 separates the original image data into a luminance signal (Y) and chrominance signals (Cb) and (Cr) (in a step S602).

Next, the block dividing section 106a in the control section 106 divides each of the luminance signal (Y) and the chrominance signals (Cb) and (Cr) into blocks each consisting of 8 (pixels) × 8 (pixels) (in a step S603).

The control section 106 conducts a discrete cosine transform (DCT) to each of the divided luminance signal (Y) and chrominance signals (Cb) and (Cr) for each block (in a step S604).

The control section 106 then conducts quantizes the DCT coefficients of each of the DCT-processed luminance signal (Y) and chrominance signals (Cb) and (Cr) for each block (in a step S605).

At this moment, each of the luminance signal (Y) and chrominance signals (Cb) and (Cr) DCT coefficients of which have been quantized is zigzag-scanned for each block and a high frequency region having lower zigzag scan values is discarded, thereby separating each signal into DC coefficients and AC coefficients.

The image loss-less-compression processing section 103 conducts reversibly compressed a data series derived from the differences between DC coefficients of adjacent blocks (in a step S606).

Further, the image loss-less-compression processing section 103 reversibly compressed a data series derived from the differences between adjacent AC coefficients for each block (in a step S607).

Next, the encoding processing section 105 encodes only the DC coefficients which have been reversibly compressed (in a step S608).

The header information recording section 104 creates header information, such as image size and a quantization table, for each of the luminance signal (Y) and chrominance signals (Cb) and (Cr) each of which contains the DC coefficients which have reversibly compressed and encoded and the AC coefficients which have been only reversibly compressed, and writes the created header information to the file header, thereby recording and storing each signal as one file (in a step S609).

Next, the header information recording section 104 writes a code indicating that encoding has been carried out, to a predetermined position of the file header (in a step S610).

The control section 106 formats each of the luminance signal (Y) and chrominance signals (Cb) and (Cr) for a JPEG image, each of which signal contains the DC coefficients and the AC coefficients and which is recorded and stored as one file by writing the header information to the file header, thereby providing a JPEG image file (in a step S611).

According to the second concrete example stated above, there is provided an image signal processor, based on the image signal processor according to the above-stated first concrete example, corresponding to the second embodiment stated above and characterized by comprising the block dividing section 106a for dividing image data into a plurality of blocks each of a predetermined size, the loss-less-compression processing section 103 for reversibly compressing each component after separating the image data into DC coefficients and AC coefficients for each block divided by the block dividing section, and the header information recording section 107 for creating header information on the compressed data for each component separated by the loss-less-compression processing section.

Further, according to the second concrete example, there is provided an image signal processor corresponding to the above-stated second embodiment and characterized in that the header information crating section 107 records a code indicating that the image data on the DC coefficients has been encoded by the encoding processing section 103, to a predetermined position in the header information.

According to the above-stated second concrete example, there is provided an image signal processor, based on the image signal processor according to the above-stated first concrete example, corresponding to the above-stated second embodiment and characterized in that the compression processing section 103 comprises the block dividing section 106a for dividing the image data into a plurality of blocks each of a predetermined size, the loss-less-compression processing section 103 for reversibly compressing each component after separating the image data into DC coefficients and AC coefficients for each block divided by the block dividing section, and the header information recording section 107 for creating header information on the compressed data for each component separated by the loss-less-compression processing section.

Furthermore, according to the above-stated second concrete example, there is provided an image signal processor corresponding to the above-stated second embodiment and characterized in that the header information recording section 107 records a code indicating that the image data on the DC coefficients has been encoded by the encoding processing section 103, to a predetermined position in the header information.

### (Third Concrete Example)

The concrete constitution of an image signal processor according to the third concrete example is the same as that of the image signal processor according to the first concrete example shown in FIG. 5.

FIG. 8 is a flow chart for describing processing procedures based on the concrete constitution of the image signal processor according to the third concrete example.

First, the data input/output section 101 inputs original image data (RGB image data) (in a step S801).

Second, the control section 106 separates the original image data (RGB image data) into a luminance signal (Y) and chrominance signals (Cb) and (Cr) (in a step S802).

Next, the block dividing section 106a in the control section 106 divides each of the luminance signal (Y) and chrominance signals (Cb) and (Cr) into blocks each consisting of 8 (pixels) × 8 (pixels) (in a step S803).

The control section then conducts a discrete cosine transform (DCT) to each of the divided luminance signal (Y) and chrominance signals (Cb) and (Cr) for each block (in a step S804).

The control section 106 quantizes DCT coefficients of each of the DCT-processed luminance signal (Y) and chrominance signals (Cb) and (Cr) according to DCT counting for each block (in a step S805).

At this moment, each of the luminance signal (Y) and chrominance signals (Cb) and (Cr) DCT coefficients of which have been quantized is zigzag-scanned for each block and a high frequency region having lower zigzag scan values is discarded, thereby separating each signal into DC coefficients and AC coefficients.

The image loss-less-compression processing section 103 reversibly compresses a data series derived from the differences between DC coefficients of adjacent blocks (in a step S806).

The image loss-less-compression processing section 103 also reversibly compresses a data series derived from the differences between adjacent AC coefficients for each block (in a step S807).

Next, the encoding processing section 105 encodes only the reversibly compressed DC coefficients (in a step S808).

The header information recording section 104 creates header information, such as image size and a quantization table, on each of the luminance signal (Y) and chrominance signals (Cb) and (Cr) each of which signal contains the DC coefficients which have been reversibly compressed and encoded and the AC coefficients which have been only reversibly compressed, and writes the created header information to the file header, thereby recording and storing each signal as one file (in a step S809).

Next, the header information recording section 104 writes the data length of the DC coefficients which have been reversibly compressed and encoded, to a predetermined position of the file header (in a step S810).

The control section 106 formats each of the luminance signal (Y) and chrominance signals (Cb) and (Cr) according to DCT counting, each of which signal contains the DC coefficients and the AC coefficients and which is recorded and stored as one file by writing the header information to the file header, thereby providing a JPEG image file (in a step S811).

According to the third concrete example stated above, there is provided an image signal processor, based on the image signal processor according to the second concrete example, corresponding to the third embodiment stated above and characterized in that the header information recording section 104 records the size of the image data before the DC coefficients are encoded, to a predetermined position in the header information if the encoding processing section 103 employs the block encoding method.

### (Fourth Concrete Example)

FIG. 9 is a block diagram showing the concrete constitution of an image signal processor according to the fourth concrete example.

Namely, the image signal processor according to the fourth concrete example is constituted as an image decoder 200 consisting of a data input/output section 201, an expansion processing section 202 with respect to an image lossy-compression processing, an expansion processing section 203 with respect to an image loss-less-compression processing, a header information reading section 204, a decoding processing section 205 and a control section 206, all of which constituent elements are mutually connected by an internal bus.

Since the data input/output section 201 is connected to an external module, an external apparatus or the like, the section 201 inputs compressed image data at least DC coefficients of which have been encoded by the image signal processor or the like according to the above-stated first to third concrete examples, and outputs, if necessary, a decoded mage data file or the like.

The header information read section 204 reads header information, such as image size and a quantization table, on the compressed image data recorded on a file header part in the course of the above-stated JPEG compression.

The decoding processing section 205 reads the encoded DC coefficients from the input, compressed image data at least DC coefficients of which have been encoded, based on the header information read by the header information read section 204, and decodes the image data on the encoded DC coefficients using a predetermined decoding key.

Further, the expansion processing section 202 with respect to the image lossy-compression processing and the expansion processing section 203 with respect to the image loss-less-compression processing conduct, if necessary, an expansion processing with respect to the image lossy-compression processing and an expansion processing with respect to the image loss-less-compression processing to the image data decoded by the decoding processing section 205 for the DC coefficients and AC coefficients, respectively, separated in the course of the above-stated JPEG compression according to the JPEG compression scheme stated above, based on the header information read by the header information reading section 204.

The control section 206 controls the other constituent elements and conducts predetermined operations and processings necessary for the decoding processing conducted to the DC coefficients in the above-stated image data and necessary for the expansion processing conducted to the DC coefficients and the AC coefficients, respectively.

FIG. 10 is a flow chart for describing processing procedures based on the concrete constitution of the image signal processor according to the fourth concrete example.

The data input/output section 201 inputs compressed image data at least DC coefficients of which have been encoded (in a step S301).

The control section 206 reads the encoded DC coefficients based on the header information read by the header information read section 204 (in a step S302).

Next, the decoding processing section 205 decodes the image data on the DC coefficients thus read using a predetermined decoding key (in a step S303).

Next, the expansion processing section 202 with respect to the image lossy-compression processing and the expansion processing section 203 with respect to the image loss-less-compression processing section conduct expansion processings according to a well-known method, to the image data decoded by the decoding processing section 205 based on the header information read by the header information reading section 204, respectively (in a step S304).

Specifically, an expansion processing with respect to the image lossy-compression processing or an expansion processing with respect to the image loss-less-compression processing is conducted, if necessary, to the DC coefficients and the AC coefficients, respectively, separated in the course of the JPEG compression according to the above-stated JPEG compression scheme.

Next, the data input/output section 201 outputs, if necessary, the image data which has been decoded and expanded (in a step S305).

### (Fifth Concrete Example)

The concrete constitution of an image signal processor according to the fifth concrete example is the same as that of the image signal processor according to the fourth concrete example shown in FIG. 9.

FIG. 11 is a flow chart for describing processing procedures based on the concrete constitution of the image signal processor according to the fifth concrete example.

First, the data input/output section 201 inputs compressed image data at least DC coefficients of which have been encoded (in a step S701).

The control section 206 searches for a code indicating that the input, compressed image data has been encoded from the header information read by the header information reading section 204 (in a step S702).

Next, the control section 206 determines whether or not the code indicating that the input, compressed image data has been encoded is present (in a step S703).

The decoding processing section 205 decodes the image data on the DC coefficients thus read using a predetermined decoding key if the control section 206 determines that the code indicating that the input, compressed image data has been encoded is present (in a step S704).

The expansion processing section 202 with respect to an image lossy-compression processing section and the expansion processing section 203 with respect to an image loss-less-compression processing conducts expansion processings to the image data when the control section 206 determines that the code indicating that the input, compressed image data has been encoded is not present, according to a well-known method based on the header information read by the header information reading section 204, respectively (in a step S705).

Specifically, an expansion processing with respect to the image lossy-compression processing or an expansion processing with respect to the image loss-less-compression processing is conducted, if necessary, to the DC coefficients and AC coefficients, respectively, separated from each other in the course of a JPEG compression according to the above-stated JPEG compression scheme.

Next, the data input/output section 201 outputs, if necessary, the image data which has been decoded and expanded (in a step S706).

According to the above-stated fifth concrete example, there is provided an image signal processor characterized by comprising:
the information reading section 204 for reading predetermined information from image data at least part of which has been compressed and encoded, the decoding processing section 205 for reading the encoded DC component data from the compressed image data based on the predetermined information read by the information reading section and decoding the image data on the DC component thus read using a predetermined decoding key, and the expansion processing section 203 for expanding the image data on the DC coefficients decoded by the decoding processing section based on the predetermined information.

Further, according to the above-stated fifth concrete example, there is provided an image signal processor characterized in that the expansion processing sections 202 and 203 expand the image data using the predetermined information, the image data on the DC coefficients and the image data on the AC coefficients.

### (Sixth Concrete Example)

The concrete constitution of an image signal processor according to the sixth concrete example is the same as that of the image signal processor according to the fourth concrete example shown in FIG. 9.

FIG. 12 is a flow chart for describing processing procedures based on the concrete constitution of the image signal processor according to the sixth concrete example.

First, the data input/output section 201 inputs compressed image data at least DC coefficients of which have been encoded (in a step S901).

Second, the control section 206 reads the data length of the DC coefficients from header information read by the header information reading section 204 (in a step S902).

Next, the decoding processing section 205 decodes the image data on the DC coefficients using a predetermined decoding key based on the data length of the DC coefficients thus read (in a step S903).

The expansion processing section 202 with respect to an image lossy-compression processing and the expansion processing section 203 with respect to an image loss-less-compression processing conduct expansion processings to the image data decoded by the decoding processing section 204 or to the image data when the control section 206 determines that a code indicating that the input, compressed image data have been encoded is not present, according to a well-known method based on the header information read by the header information reading section 204 (in a step S904).

Specifically, an expansion processing with respect to the image lossy-compression processing or an expansion processing with respect to the image loss-less-compression processing is conducted, if necessary, to the DC coefficients and the AC coefficients, respectively, separated from each other in the course of JPEG compression according to the above-stated JPEG compression scheme.

Next, the data input/output section 201 outputs, if necessary, the image data which has been decoded and expanded (in a step S905).

### (Seventh Concrete Example)

FIG. 13 is a block diagram showing the concrete constitution of an image signal processor according to the seventh concrete example.

Namely, the image signal processor according to the seventh concrete example is constituted as an image encoder 300 consisting of a data input/output section 301, an image lossy-compression processing section 302, an image loss-less-compression processing section 303, a header information recording section 304, an encoding processing section 305, a control section 306 and an electronic watermark embedding section 308, all of which constituent elements are mutually connected by an internal bus.

Since connected to an external module, an external apparatus or the like, the data input/output section 301 inputs original image data (e.g., RGB image data) to be encoded and outputs, if necessary, an encoded image data file or the like.

The image lossy-compression processing section 302 and the image loss-less-compression processing section 303 conducts, if necessary, an image lossy-compression processing and an image loss-less-compression processing, respectively, to DC coefficients and AC coefficients separated from each other in the course of JPEG compression according to the above-stated JPEG compression scheme.

The header information recording section 304 creates header information, such as image size and a quantization table, on the compressed image data containing the DC coefficients and the AC coefficients separated from each other by the loss-less-compression processing in the course of the above-stated JPEG compression.

The encoding processing section 305 conducts a predetermined encoding processing only to the DC coefficients separated by the loss-less-compression processing in the course of the above-stated JPEG compression.

The control section 306 controls the other constituent elements and conducts predetermined operations and processings necessary for the JPEG compression and necessary for the encoding processing conducted only to the DC coefficients according to the above-stated JPEG compression scheme.

In that case, the control section 306 includes a block dividing section 306a for dividing image data into a plurality of blocks each of a predetermined size.

The electronic watermark embedding section 308 inserts watermark data into the image data part of the DC coefficients, which are not reversibly compressed yet, in the JPEG image file so as to protect the copyright of the image data. It is noted that the watermark data appears to be the same as the other image data.

FIG. 14 is a flow chart for describing processing procedures based on the concrete constitution of the image signal processor according to the seventh concrete example.

First, the data input/output section 301 inputs original image data (RGB image data) (in a step S401).

Second, the control section 306 separates the original image data (RGB image data) into a luminance signal (Y) and chrominance signals (Cb) and (Cr) (in a step S402).

Then, the block dividing section 306 in the control section 306 divides each of the luminance signal (Y) and the chrominance signals (Cb) and (Cr) into blocks each consisting of 8 (pixels) × 8 (pixels) (in a step S403)

The control section 306 conducts a discrete cosine transform (DCT) to each of the divided luminance signal (Y) and chrominance signals (Cb) and (Cr) for each block (in a step S404).

The control section 306 then conducts quantizes DCT coefficients of each of the DCT-processed luminance signal (Y) and chrominance signals (Cb) and (Cr) for each block (in a step S405).

At this moment, each of the luminance signal (Y) and chrominance signals (Cb) and (Cr) DCT coefficients of which have been quantized, is zigzag-scanned for each block and a high frequency area having lower zigzag scan values is discarded, thereby separating each signal into DC coefficients and AC coefficients.

The electronic mark embedding section 308 inserts electronic mark data into a data series derive from the differences between DC coefficients of adjacent blocks (in a step S406). It is noted that the electronic watermark data appears to be the same as the other image data.

The image loss-less-compression processing section 303 reversibly compresses the data series derived from the differences between the DC coefficients of adjacent blocks into which data series the electronic watermark data has been inserted (in a step S407).

Further, the image loss-less-compression processing section 303 reversibly compresses a data series derived from the differences between adjacent AC coefficients for each block (in a step S408).

Next, the encoding processing section 305 encodes only the DC coefficients which have been reversibly compressed (in a step S409).

The header information recording section 304 creates header information, such as image size and a quantization table, on each of the luminance signal (Y) and chrominance signals (Cb) and (Cr) each of which signal contains the DC coefficients which have been reversibly compressed and encoded and the AC coefficients which have been only reversibly compressed, and writes the created header information to a file header, thereby recording and storing each signal as one file (in a step S410).

The control section 306 formats each of the luminance signal (Y) and chrominance signals (Cb) and (Cr) for a JPEG image, each of which signal contains the DC coefficients and the AC coefficients and which has been recorded and stored as one file by writing the header information to the file header, thereby providing an JPEG image file (in a step S411).

According to the above-stated seventh concrete example, there is provided an image signal processor, based on the image signal processor according to the second concrete example, corresponding to the fourth embodiment stated above and characterized in that the encoding processing section 305 is provided with the information embedding section 308 for embedding the electronic watermark data as predetermined authentication information into the image data on the DC coefficients after the image data has been separated into the DC coefficients and the AC coefficients and that the loss-less-compression processing section 303 reversibly compresses the image data on the DC coefficients into which the authentication information has been embedded by the information embedding section.

### (Eighth Concrete Example)

FIG. 15 is a block diagram showing the concrete constitution of an image signal processor according to the eighth concrete example.

Namely, the image signal processor according to the eighth concrete example is constituted as an image decoder 200 consisting of a data input/output section 401, an expansion processing section 402 with respect to an image lossy-compression processing, an expansion processing section 403 with respect to an image loss-less-compression processing, a header information reading section 404, a decoding processing section 407, a control section 406 and an electronic watermark reading section 409, all of which constituent elements are mutually connected by an internal bus.

Since connected to an external module, an external apparatus or the like, the data input/output section 401 inputs compressed image data at least DC coefficients of which have been encoded by the image signal processor according to the first to third concrete examples and outputs, if necessary, a decoded image data file or the like.

The header information reading section 404 reads header information, such as image size and a quantization table, on the compressed image data recorded in the file header part in the course of the above-stated JPEG compression.

The decoding processing section 407 reads the encoded DC component from the input, compressed image data at least DC coefficients of which have been encoded based on the header information read by the header information reading section 404, and decodes the image data on the encoded DC component using a predetermined decoding key.

Further, the expansion processing section 402 with respect to an image lossy-compression processing and the expansion processing section 403 with respect to an image loss-less-compression processing section conduct, if necessary, an expansion processing with respect to the image lossy-compression processing and an expansion processing with respect to the image loss-less-compression processing, respectively, to the image data decoded by the decoding processing section 407 for the DC coefficients and the AC coefficients, respectively, separated from each other in the course of the JPEG compression according to the above-stated JPEG compression scheme, based on the header information read by the header information reading section 404.

The control section 406 controls the other constituent elements and conducts predetermined operations and processings necessary for the decoding processing conducted to the DC coefficients in the image data and necessary for the expansion processings for the DC coefficients and the AC coefficients, respectively.

The electronic watermark reading section 409 reads electronic watermark data inserted into a data series of the encoded DC coefficients among the input, compressed image data.

FIG. 16 is a flow chart for describing processing procedures based on the concrete constitution of the image signal processor according to the eighth concrete example.

First, the data input/output section 401 inputs compressed (JPEG) image data at least DC coefficients of which have been encoded (in a step S501).

Next, the control section 406 reads the encoded DC coefficients based on the header information read by the header information reading section 404 (in a step S502).

The decoding processing section 407 decodes the image data on the DC coefficients thus read using a predetermined decoding key (in a step S503).

Next, the expansion processing section 403 with respect to the image loss-less-compression processing acquires a data series of the DC coefficients by expanding the image data on the DC coefficients decoded by the decoding processing section 407 (in a step S504).

The electronic watermark reading section 409 reads electronic watermark data from the data series of the DC coefficients (in a step S505).

The expansion processing 402 with respect to the image lossy-compression processing and the expansion processing section 403 with respect to the image loss-less-compression processing expand the image data decoded by the decoding processing section 407 or the image data when the control section 406 determines that a code indicating that the input, compressed image data has been encoded is not present, based on the header information read by the header information reading section 404 according to a well-known method (in a step S506).

Specifically, an expansion processing with respect to the image lossy-compression processing and an expansion processing with respect to the image loss-less-compression processing is conducted, if necessary, for the DC coefficients and the AC coefficients, respectively, separated from each other in the course of JPEG compression conducted according to the above-stated JPEG compression scheme.

Next, the data input/output section 401 outputs, if necessary, the image data which has been decoded and expanded (in a step S507).

According to the above-stated seventh concrete example, there is provided an image signal processor characterized by comprising: the header information reading section 404 for reading header information from the image data at least part of which has been compressed and encoded and which has header information as predetermined authentication information on DC component data, the decoding processing section 407 for reading the encoded DC component data from the compressed image data based on the header information read by the information reading section and decoding the encoded image data on the DC coefficients using a predetermined decoding key, the expansion processing section 403 for expanding the image data on the DC coefficients decoded by the decoding processing section based on the predetermined information and thereby acquiring a data series of DC coefficients, and the electronic watermark reading section 409 serving as an authentication information reading section for reading the predetermined authentication information from the data series of the DC coefficients acquired by the expansion processing section.

Therefore, as described so far, the present invention can provide an image signal processor conducting processings including image data encoding and decoding processings, which processor can encode a mass storage data file such as an image data file at high speed by employing the technique for encoding only the image data part of the DC coefficients so as to secure the secrecy of the contents of image data.

Moreover, the present invention can provide an mage signal processor conducting processings including image data encoding and decoding processings, which processor can encode an image data file at high speed and can insert electronic watermark information into an image by employing the technique for encoding only the image data part of the DC coefficients and the technique for inserting electronic watermark data into the image so as to secure the secrecy of the contents of the image data and to protect the copyright of the image data.

## Claims

1. An image signal processor characterized by comprising:
a compression processing section (102, 103) for separating image data into DC coefficients and AC coefficients, and compressing the DC coefficients and the AC coefficients, respectively; and
an encoding processing section (105) for encoding the DC coefficients of the image data computed by the compression processing section (102, 103).

2. An image signal processor according to claim 1, characterized in that
the compression processing section (102, 103) comprises:
a block dividing section (106a) for dividing the image data into a plurality of blocks each of a predetermined size;
a loss-less-compression processing section (103) for separating the image data into the DC coefficients and the AC coefficients for each of the blocks divided by the block dividing section (106a), and then loss-less compressing the DC coefficients and AC coefficients, respectively; and
a header information recording section (104) for recording header information on the compressed data for the respective DC coefficients and AC coefficients separated from each other by the loss-less-compression processing section.

3. An image signal processor according to claim 1, characterized in that
the compressing processing section (102, 103) comprises:
a block dividing section (106a) for dividing image data into a plurality of blocks each of predetermined size;
a lossy-compression processing section (102) for conducting a discrete cosine transform to the image data for each of the blocks divided by the block dividing section (106a), and quantizing discrete cosine transform coefficients, thereby lossy compressing the image data for each block;
a loss-less-compression processing section (103) for separating the image data for each of the blocks lossy compressed by the lossy-compression processing section (102) into the DC coefficients and the AC coefficients, and then loss-less compressing the DC coefficients and the AC coefficients, respectively; and
a header information recording section (104) for recording header information on the compressed image data for the DC coefficients and the AC coefficients separated from each other by the loss-less-compression processing section (103), respectively.

4. An image signal processor according to claim 2, characterized in that
the encoding processing section (105) includes an information embedding section (308) for separating the image data into the DC coefficients and the AC coefficients, and then embedding predetermined authentication information into the image data corresponding to the DC coefficients; and
the loss-less-compression processing section (103) loss-less compresses the image data corresponding to the DC coefficients into which the authentication information has been embedded by the information embedding section (308).

5. An image signal processor according to claim 4, characterized in that the authentication information is at least one of electronic signature and electronic watermark to prevent illegal manipulation or to specify copyright.

6. An image signal processor according to claim 2, characterized in that the header information recording section (104) records a code indicating that the image data corresponding to the DC coefficients have been encoded by the encoding processing section (105), to a predetermined position in header information.

7. An image signal processor according to claim 3, characterized in that the header information recording section (104) records a code indicating that the image data corresponding to the DC coefficients have been encoded by the encoding processing section (105), to a predetermined position in header information.

8. An image signal processor according to claim 6, characterized in that the header information recording section (104) records a size of the image data in which the DC coefficients are not encoded, to a predetermined position in the header information if the encoding processing section employs a block encoding technique.

9. An image signal processor according to claim 7, characterized in that the header information recording section (104) records a size of the image data in which the DC coefficients are not encoded, to a predetermined position in the header information if the encoding processing section (105) employs a block encoding technique.

10. An image signal processor characterized by comprising:
an information reading section (404) for reading predetermined information from image data, at least part of the image data has been compressed and encoded;
a decoding processing section (407) for reading encoded DC coefficient data from the compressed image data based on the predetermined information read by the information reading section, and decoding image data corresponding to the encoded DC coefficients using a decoding key; and
an expansion processing section (402, 403) for expanding the image data corresponding to the DC coefficients decoded by the decoding processing section (407) based on the predetermined information.

11. An image signal processor according to claim 10, characterized in that the expansion processing section (402, 403) expands the image data using the predetermined information, the image data corresponding to the DC coefficients and image data corresponding to the AC coefficients.

12. An image signal processor according to claim 10, characterized in that the expansion processing section (402, 403) includes an authentication information reading section for reading the authentication information embedded into the image data corresponding to the DC coefficients.

13. An image signal processor according to claim 12, characterized in that
the information reading section (404) includes a header information reading section (404) for reading header information on the image data;
the expansion processing section (402, 403) expands the compressed image data based on the predetermined information read by the information reading section (404) including the header information reading section (404); and
the decoding processing section (407) decodes the encoded image data using a decoding key.

14. An image signal processor characterized by comprising:
a header information reading section (404) for reading header information from image data having the header information, at least part of the image data has been compressed and encoded, predetermined authentication information embedded into DC coefficient data in the image data;
a decoding processing section (407) for reading encoded DC coefficient data from the compressed image data based on the header information read by the header information reading section (404), and decoding image data corresponding to the encoded DC coefficients using a predetermined decoding key;
an expansion processing section (402, 403) for expanding the image data corresponding to the DC coefficients decoded by the decoding processing section (407), and thereby acquiring a data series of the DC coefficients; and
an authentication information reading section for reading the predetermined authentication information from the data series of the DC coefficients acquired by the expansion processing section (402, 403).
